# EUROPEAN PATENT APPLICATION

(11) **EP 3 163 843 A1**
(43) Date of publication of application: **03.05.2017**
(21) Application number: 14895911.7
(22) Date of filing: 01.12.2014
(51) Int. Cl.: H04L 29/08

(54) **METHOD AND DEVICE FOR PROVIDING NETWORK SERVICE, EVALUATING POLICY RULE AND SELECTING SERVICE ASSEMBLY**

(30) Priority: 27.06.2014 CN 201410300829
(71) Applicant: ZTE Corporation, Shenzhen, Guangdong 518057 (CN)
(72) Inventor: ZONG, Zaifeng, Shenzhen Guangdong 518057 (CN); WU, Se, Shenzhen Guangdong 518057 (CN); FANG, Min, Shenzhen Guangdong 518057 (CN); TAO, Quanjun, Shenzhen Guangdong 518057 (CN); ZHU, Jinguo, Shenzhen Guangdong 518057 (CN)
(74) Representative: Awapatent AB
(86) International application number: PCT/CN2014/092721
(87) International publication number: WO 2015/196733

(57) **Abstract**

The present invention discloses methods and devices for providing network service, evaluating a policy rule and selecting a service component. In the abovementioned architecture, a management layer is arranged to acquire a network service requirement of a user, and perform creation, orchestration and scheduling on function components on an execution layer based on the network service requirement; and the execution layer is arranged to provide the network service for the user, and/or, report information to be used by the management layer in a process of performing creation, orchestration and scheduling on the function components to the management layer, herein, the execution layer is formed by networking multiple function components, and the function components include at least one of the following: a network component and a business component. According to the technical solutions provided by the present invention, an operating company may customize and automatically schedule a network according to a requirement of the user, thereby providing service for the user more conveniently.

## Description

### Technical Field

The present invention relates to the field of communication, and more particularly to methods and devices for providing network service, evaluating a policy rule and selecting a service component.

### Background of the Related Art

In recent times, mobile communication has been rapidly developed for over 20 years to bring enormous influence to life styles and work styles of people and various aspects such as politics and economy of the society. The human society has gradually entered an efficient information age, and business application requirements of various aspects explosively increase to bring great challenges to each aspect such as a frequency, technology and operation of a wireless mobile bandwidth system.

A 5th-Generation (5G) mobile communication technology-based mobile wideband system will become a wireless mobile communication system oriented to a requirement of the human information society after 2020, and it is a network integrating multiple businesses and multiple technologies, and meets continuous development requirements of extensive data and connections of various businesses in the future through technology evolutions and innovations and improves user experiences. Along with improvement of bandwidth and capability of a wireless mobile communication system, mobile Internet and Internet of things applications oriented to individuals and industries are rapidly developed, and mobile communication related industrial ecology will change. A wireless mobile communication technology and a computer and information technology will cross merge more closely and deeply, and integrated circuits, device processes, software technologies and the like will also be continuously and rapidly developed to support development of the future 5G mobile wideband industry.

From future 5G vision analysis made according to social responsibilities and functions, terminal users, business applications, network operation and the like, 5G will become a diversified network capable of meeting different requirements and different scenarios. A 5G network requirement defined by METIS may include, but is not limited to, a few scenarios below:
Device to Device (D2D) communication;
Massive Machine Communication (MMC);
Moving network;
Ultra Dense Network (UDN); and
Ultra-Reliable Communication (URC).

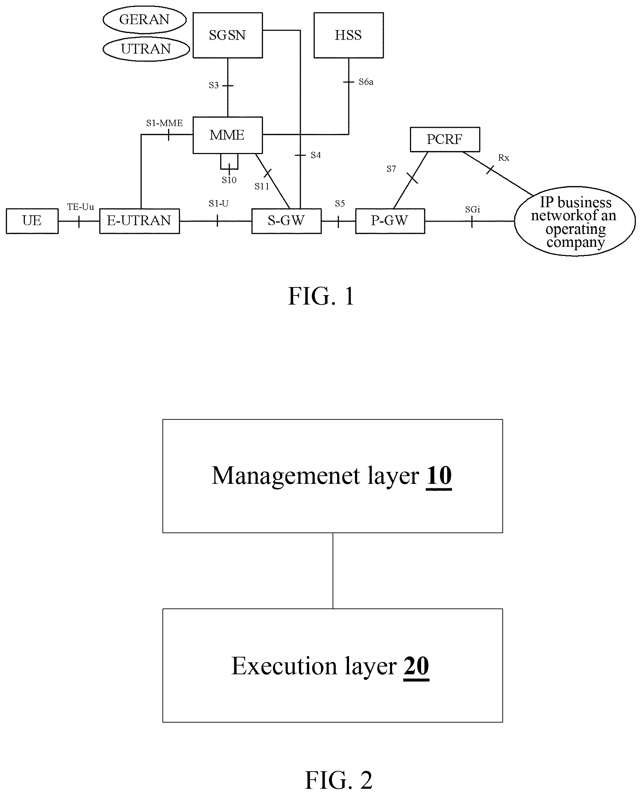

FIG. 1 is a schematic diagram of a network architecture of a 4th-Generation (4G) mobile communication technology-based Evolved Packet Core (EPC) according to an existing technology. As shown in FIG. 1, the network architecture may include parts below:
an Evolved Universal Terrestrial Radio Access Network (E-UTRAN): arranged to realize all wireless functions related to an evolved network;
a Mobility Management Entity (MME): responsible for control-plane mobility management, including, but not limited to: user context and mobility state management, and temporary user identifier allocation;
a Serving Gateway (S-GW): a user-plane entity responsible for user-plane data route processing;
a Packet Data Network Gateway (PDN GW or P-GW): responsible for a gateway function of access of a User Equipment (UE) to a Packet Data Network (PDN),
here it is important to note that the P-GW and the S-GW may be integrated in a physical entity;
a Serving General Packet Radio Service Supporting Node (SGSN);
a Policy and Charging Rule Function (PCRF): arranged to be a policy control decision and flow-based charging control function; and
a Home Subscriber Server (HSS): arranged to store user subscription information.

In a conventional network, deploying a set of private network for meeting a special requirement will consume a lot of manpower, material resources and financial resources. Therefore, an operating company usually meets different requirements in a manner of adding a patch based on an existing network. The conventional deployment manner is not only easy to prolong a deployment cycle of a new business but also makes the network of the operating company swollen, and various functions are integrated into one network, thereby causing difficulties in operation and maintenance and network complexity.

A future 5G network is a network with multiple application scenarios and multiple-accesses cooperating. Different application scenarios have different requirements on networks. Some application scenarios require high-bandwidth access, while some application scenarios require low-delay processing, and there are some other application scenarios requiring higher security. Moreover, various application scenarios also require different service lives of networks, some application scenarios require networks which may be used for dozens of years and even hundreds of years, while some application scenarios may require networks which may be maintained for only a few hours. Therefore, it is very difficult to satisfy all of the abovementioned application scenarios through only one static network, and moreover, even though it is possible, there must be enormous cost. Therefore, a capability-open dynamic network capable of being automatically scheduled according to a requirement is necessarily a development trend of the future 5G network.

Emergence of a cloud computing and virtualization technology makes it possible for an operating company to customize different networks according to different scenarios and requirements. A mobile network element constructed based on a virtual machine may be conveniently customized to meet different network requirements according to functions. Rise of new technologies such as Network Function Virtualization (NFV), Software Defined Network (SDN) and cloud computing makes it possible to dynamically generate and schedule a network element according to a requirement. NFV enables a telecommunication operating company and a device manufacturer to conveniently implement a carrier-class device by virtue of a universal server to separate software and hardware, thereby accelerating development of a new business and reducing operation and maintenance cost of the operating company, etc.. NFV is a platform technology, and may provide service for various kinds of carrier-class businesses. A basic function of an NFV system is to instantiate a network prototype disclosed by an Operation Support System/Business Support System (OSS/BSS) according to a requirement of the OSS/BSS, and may include: creating a virtual network element instance according to the requirement of the OSS/BSS, establishing a connection between virtual network element instances and a connection between a virtual network element and another network element, and performing automatic scaling management on capacity of a virtual network element according to a system load, thereby achieving power saving and the like based on meeting the requirement. However, the NFV system can not make a decision about network creation or modification, and the decision is required to be made by a management layer of the operating company. An OSS/BSS in an existing network has not a function of automatic network deployment.

### Summary of the Invention

An embodiment of the present invention provides methods and devices for providing network service, evaluating a policy rule and selecting a service component, so as to at least solve the problem that it is difficult for an operating company to customize and automatically schedule a network according to a requirement of a user in the related technology.

According to an aspect of the present invention, a communication network architecture is provided.

The network communication architecture according to the embodiment of the present invention includes: a management layer, arranged to acquire a network service requirement of a user, and perform creation, orchestration and scheduling on function components on an execution layer based on the network service requirement; and the execution layer, arranged to provide a network service for the user, and/or, report information to be used by the management layer in a process of performing creation, orchestration and scheduling on the function components to the management layer, herein, the execution layer is formed by networking a plurality of function components, and the function components include at least one of the following: a network component and a business component.

Alternatively, the management layer includes: a network component information management module, arranged to provide state information of a network component instance which currently runs; a business component information management module, arranged to provide state information of a business component instance which currently runs; a user information management module, arranged to provide state information of the user; and a user network service orchestration and management module, arranged to acquire policy rule information, and perform creation, orchestration and scheduling on the function components according to the policy rule information, the network service requirement of the user and a network characteristic information set, herein, the network characteristic information set includes at least one of the following: the state information of the network component instance, the state information of the business component instance and the state information of the user.

Alternatively, the management layer further includes: a policy rule library, arranged to provide the policy rule information; and a policy effect evaluation module, arranged to evaluate an execution result of the policy rule information, and determine whether it is necessary to modify the policy rule information.

Alternatively, the management layer further includes: a network component library, arranged to provide a network component to be generated, herein, information provided in the network component library includes at least one of the following: a function description about the network component, network component provider information, an available license quantity and a network component image; a business component library, arranged to provide a business component to be generated, herein, information provided in the business component library includes at least one of the following: a function description about the business component, business component provider information, an available license quantity and a business component image; and a user subscription library, arranged to manage user subscription information.

Alternatively, the execution layer includes: the network component, arranged to provide an access service; and the business component, arranged to provide a value-added service for business data.

According to another aspect of the present invention, a method for providing a network service based on the abovementioned communication network architecture is provided.

The method for providing the network service according to the embodiment of the present invention includes: acquiring a network service requirement of a user, policy rule information and a network characteristic information set of a currently running network, herein, the network characteristic information set includes at least one of the following: state information of a network component instance, state information of a business component instance and state information of the user; determining a network orchestration solution according to the network service requirement of the user, the policy rule information and the network characteristic information set; and providing the network service for the user by using the network orchestration solution.

Alternatively, acquiring the network characteristic information set includes at least one of the following: acquiring the state information of the network component instance from a network component information management module; acquiring the state information of the business component instance from a business component information management module; acquiring the state information of the user from a user information management module; and acquiring the policy rule information from a policy rule library.

Alternatively, the state information of the network component instance includes at least one of the following: a position of the network component instance, load, capacity, reliability and network topology; the state information of the business component instance includes at least one of the following: load, capacity, capability, a network topology and a position of the business component instance; and the state information of the user includes at least one of the following: mobility, a position, Quality of Service (QoS), a business preference, and a terminal capability.

Alternatively, providing the network service for the user by using the network orchestration solution includes one of the following: creating a new network component instance and/or business component instance according to the network orchestration solution; updating an existing network component instance and/or business component instance according to the network orchestration solution; and configuring current connecting relationships between network component instances, and/or between business component instances and/or between network component instances and business component instances are configured according to the network orchestration solution.

Alternatively, creating the new network component instance and/or business component instance according to the network orchestration solution includes: calling a network component to be generated from a network component library, and/or, calling a business component to be generated from a business component library; requesting an NFV platform to allocate a first virtual machine to the called network component to perform instantiation processing on the called network component; and/or, requesting the NFV platform to allocate a second virtual machine to the called business component to perform instantiation processing on the called business component.

Alternatively, an updating request is sent to the NFV platform according to the network orchestration solution, herein, the updating request is used to request the NFV platform to perform updating processing on the existing network component instance and/or business component instance, and updating processing includes one of the following: capacity expansion performed on the existing network component instance and/or business component instance, version upgrading performed on the existing network component instance and/or business component instance, and virtual machine migration performed on the existing network component instance and/or business component instance.

Alternatively, current communication paths between the network component instances and/or between the business component instances and/or between the network component instances and the business component instances are configured according to the network orchestration solution, herein a configured content includes at least one of the following: configuration of an Internet Protocol (IP) route, configuration of a link security parameter and configuration of a QoS parameter of a communication link.

According to another aspect of the present invention, a method for evaluating a policy rule based on the abovementioned communication network architecture is provided.

The method for evaluating the policy rule according to the embodiment of the present invention includes: acquiring a network characteristic information set of a currently running network, herein, the network characteristic information set includes at least one of the following: state information of a network component instance, state information of a business component instance and state information of a user; and evaluating a currently used policy rule according to the network characteristic information set, and modifying the policy rule when an evaluation result does not meet a preset requirement.

Alternatively, after modifying the policy rule, the method further includes: pushing the modified policy rule to a user network service orchestration and management module to trigger the user network service orchestration and management module to regulate a network deployment of an execution layer.

According to yet another aspect of the present invention, a method for selecting a service component based on the abovementioned communication network architecture is provided.

The method for selecting the service component according to the embodiment of the present invention includes: judging whether a terminal to be accessed is pre-configured with a component selection policy, herein, the component selection policy is used to determine a network component instance and/or business component instance providing network service for the terminal; and determining the network component instance and/or business component instance providing the network service according to a judgment result.

Alternatively, determining the network component instance and/or business component instance providing the network service according to the judgment result includes: determining that the terminal is pre-configured with the component selection policy according to the judgment result; and selecting the network component instance and/or business component instance providing the network service for the terminal according to the component selection policy.

Alternatively, determining the network component instance and/or business component instance providing the network service according to the judgment result includes: determining that the terminal is not pre-configured with the component selection policy according to the judgment result; acquiring a network characteristic information set of a currently running network, herein, the network characteristic information set includes at least one of the following: state information of the network component instance, state information of the business component instance, and state information of a user; and selecting the network component instance and/or business component instance providing the network service for the terminal according to the network characteristic information set.

According to yet another aspect of the present invention, a device for providing a network service based on the abovementioned communication network architecture is provided.

The device for providing the network service according to the embodiment of the present invention includes: an acquisition module, arranged to acquire a network service requirement, policy rule information and a network characteristic information set of a currently running network, herein, the network characteristic information set includes at least one of the following: state information of a network component instance, state information of a business component instance and state information of a user; a determination module, arranged to determine a network orchestration solution according to the network service requirement, the policy rule information and the network characteristic information set of the currently running network; and an execution module, arranged to provide the network service for the user by using the network orchestration solution.

Alternatively, the acquisition module includes: a first acquisition unit, arranged to acquire the state information of the network component from a network component information management module; a second acquisition unit, arranged to acquire the state information of the business component instance from a business component information management module; a third acquisition unit, arranged to acquire the state information of the user from a user information management module; and a fourth acquisition unit, arranged to acquire the policy rule information from a policy rule library.

Alternatively, the execution module includes: a first execution unit, arranged to create a new network component instance and/or business component instance according to the network orchestration solution; a second execution unit, arranged to update an existing network component instance and/or business component instance according to the network orchestration solution; and a third execution unit, arranged to configure current connecting relationships between network component instances, and/or between business component instances and/or between network component instances and business component instances according to the network orchestration solution.

Alternatively, the first execution unit includes: a calling subunit, arranged to call a network component to be generated from a network component library, and/or, call a business component to be generated from a business component library; and a request subunit, arranged to request an NFV platform to allocate a first virtual machine to the called network component to perform instantiation processing on the called network component, and/or, request the NFV platform to allocate a second virtual machine to the called business component to perform instantiation processing on the called business component.

Alternatively, the second execution unit is arranged to send an updating request to the NFV platform according to the network orchestration solution, herein, the updating request is used to request the NFV platform to perform updating processing on the existing network component instance and/or business component instance, and updating processing includes at least one of the following: capacity expansion performed on the existing network component instance and/or business component instance, version upgrading performed on the existing network component instance and/or business component instance, and virtual machine migration performed on the existing network component instance and/or business component instances.

Alternatively, the third execution unit is arranged to configure current communication paths between the network component instances and/or between the business component instances and/or between the network component instances and the business component instances according to the network orchestration solution, herein, a configured content include at least one of the following: configuration of an IP route, configuration of a link security parameter and configuration of a QoS parameter of a communication link.

According to yet another aspect of the present invention, a device for evaluating a policy rule based on the abovementioned communication network architecture is provided.

The device for evaluating the policy rule according to the embodiment of the present invention includes: an acquisition module, arranged to acquire a network characteristic information set of a currently running network, herein, the network characteristic information set includes at least one of the following: state information of a network component instance, state information of a business component instance and state information of a user; and a processing module, arranged to evaluate a currently used policy rule according to the network characteristic information set, and modify the policy rule when an evaluation result does not meet a preset requirement.

Alternatively, the abovementioned device further includes: a triggering module, arranged to push the modified policy rule to a user network service orchestration and management module to trigger the user network service orchestration and management module to regulate a network deployment of an execution layer.

According to yet another aspect of the present invention, a device for selecting a service component based on the abovementioned communication network architecture is provided.

The device for selecting the service component according to the embodiment of the present invention includes: a judgment module, arranged to judge whether a terminal to be accessed is pre-configured with a component selection policy, herein, the component selection policy is used to determine a network component instance and/or business component instance providing network service for the terminal; and a determination module, arranged to determine the network component instance and/or business component instance providing the network service according to a judgment result.

Alternatively, the determination module includes: a first determination unit, arranged to determine that the terminal is pre-configured with the component selection policy according to the judgment result; and a first selection unit, arranged to select the network component instance and/or business component instance providing the network service for the terminal according to the component selection policy.

Alternatively, the determination module includes: a second determination unit, arranged to determine that the terminal is not pre-configured with the component selection policy according to the judgment result; an acquisition unit, arranged to acquire a network characteristic information set of a currently running network, herein, the network characteristic information set includes at least one of the following: state information of the network component instance, state information of the business component instance, and state information of a user; and a second selection unit, arranged to select the network component instance and/or business component instance providing the network service for the terminal according to the network characteristic information set.

According to the embodiment of the present invention, the management layer is arranged to acquire the network service requirement of the user, and perform creation, orchestration and scheduling on the function components on the execution layer based on the network service requirement; and the execution layer is arranged to provide the network service for the user, and/or, report the information to be used by the management layer in the process of performing creation, orchestration and scheduling on the function components to the management layer, herein, the execution layer is formed by networking multiple function components, and the function components include at least one of the following: a network component and a business component. The problem that it is difficult for an operating company to customize and automatically schedule a network according to a requirement of the user in the related technology is solved, and the operating company may customize and automatically schedule the network according to the requirement of the user, thereby providing service for the user more conveniently.

### Brief Description of Drawings

The drawings described here are used to provide a further understanding to the present invention, and form a part of the present application. Schematic embodiments of the present invention and descriptions thereof are used to explain the present invention and not intended to form improper limits on the present invention. In the drawings:
FIG. 1 is a schematic diagram of a network architecture of a 4G EPC according to the related technology;
FIG. 2 is a structure block diagram of a communication network architecture according to an embodiment of the present invention;
FIG. 3 is a schematic diagram of a communication network architecture according to an alternative embodiment of the present invention;
FIG. 4 is a schematic diagram of a relationship between a user network orchestration and management module and another function module in a management layer according to an alternative embodiment of the present invention;
FIG. 5 is a flowchart of a method for providing a network service based on the abovementioned communication network architecture according to an embodiment of the present invention;
FIG. 6 is a schematic diagram of a relationship between a user network orchestration and management module and an NFV platform according to an alternative embodiment of the present invention;
FIG. 7 is a flowchart of execution of policy decision of a user network service orchestration and management module according to an alternative embodiment of the present invention;
FIG. 8 is a flowchart of a method for evaluating a policy rule based on the abovementioned communication network architecture according to an embodiment of the present invention;
FIG. 9 is a schematic diagram of a policy effect evaluation process according to an alternative embodiment of the present invention;
FIG. 10 is a flowchart of a method for selecting a service component based on the abovementioned communication network architecture according to an embodiment of the present invention;
FIG. 11 is a flowchart of a service path selection process during access of a mobile terminal according to an alternative embodiment of the present invention;
FIG. 12 is a structure block diagram of a device for providing a network service based on the abovementioned communication network architecture according to an embodiment of the present invention;
FIG. 13 is a structure block diagram of a device for providing a network service based on the abovementioned communication network architecture according to an alternative embodiment of the present invention;
FIG. 14 is a structure block diagram of a device for evaluating a policy rule based on the abovementioned communication network architecture according to an embodiment of the present invention;
FIG. 15 is a structure block diagram of a device for evaluating a policy rule based on the abovementioned communication network architecture according to an alternative embodiment of the present invention;
FIG. 16 is a structure block diagram of a device for selecting a service component based on the abovementioned communication network architecture according to an embodiment of the present invention; and
FIG. 17 is a structure block diagram of a device for selecting a service component based on the abovementioned communication network architecture according to an alternative embodiment of the present invention.

### Detailed Description of Embodiments

The present invention will be described below with reference to the drawings and in conjunction with embodiments in detail. It is important to note that the embodiments in the present application and characteristics in the embodiments may be combined with each other under the condition of no conflicts.

FIG. 2 is a structure block diagram of a communication network architecture according to an embodiment of the present invention. As shown in FIG. 2, the communication network architecture may include: a management layer 10, arranged to acquire a network service requirement, and perform creation, orchestration and scheduling on function components on an execution layer based on the network service requirement of a user; and the execution layer 20, arranged to provide a network service for a user, and/or, report information to be used by the management layer in a process of performing creation, orchestration and scheduling on the function components to the management layer, herein, the execution layer is formed by networking multiple function components, and the function components include at least one of the following: a network component and a business component.

It is difficult for an operating company to customize and automatically schedule a network according to a requirement of the user in the related technology. With adoption of the architecture shown in FIG. 2, the management layer is utilized to acquire the network service requirement of the user, and perform orchestration and scheduling on a network service resource and an open network capability based on the network service requirement; and the management layer may create the function components and perform orchestration and management on the created function components and/or existing function components in the execution layer, and the information to be used by the management layer in a process of performing orchestration and scheduling on the network service resource and the open network capability is reported to the management layer, thereby through information interaction for providing the network service performed between the management layer and the execution layer, the problem that it is difficult for the operating company to customize and automatically schedule the network according to the requirement of the user in the related technology is solved, and the operating company is enabled to customize and automatically schedule the network according to the requirement of the user, thereby providing the service for the user more conveniently.

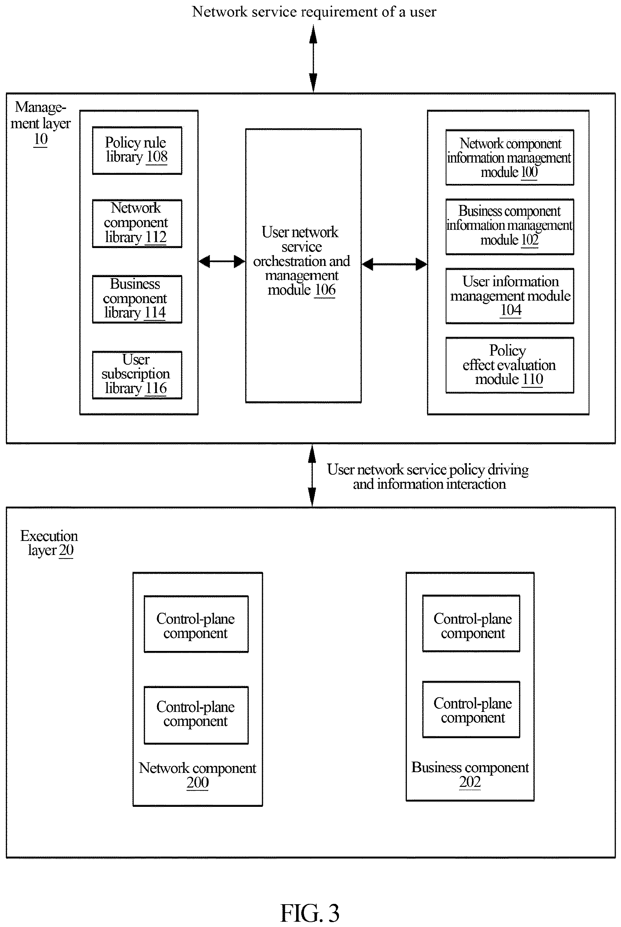

Alternatively, FIG. 3 is a schematic diagram of a communication network architecture according to an alternative embodiment of the present invention. As shown in FIG. 3, the management layer 10 may include: a network component information management module 100, arranged to provide state information of a network component instance which currently runs; a business component information management module 102, arranged to provide state information of a business component instance which currently runs; a user information management module 104, arranged to provide state information of the user; and a user network service orchestration and management module 106, arranged to acquire policy rule information, and perform creation, orchestration and scheduling on the function components according to the policy rule information, the network service requirement and a network characteristic information set, herein, the network characteristic information set includes at least one of the following: the state information of the network component instance, the state information of the business component instance and the state information of the user.

In the alternative embodiment, the network service requirement of the user may include, but is not limited to: virtual operation, a user-based network optimization requirement and a private network requirement. The state information of the network component instance may include, but is not limited to: a position of the network component, load, capacity, reliability and network topology. The state information of the business component instance may include, but is not limited to: a load, capacity, a capability, a network topology and a position of the business component. The state information of the user may include, but is not limited to: mobility, a position, Quality of Service (QoS), a business preference, and a terminal capability.

In an alternative implementation process, the abovementioned network component instance and business component instance may be shared by multiple users, and may also be private component instances customized for a specific user, thereby constructing a private network serving the user.

Alternatively, as shown in FIG. 3, the management layer 10 may further include: a policy rule library 108, arranged to provide the policy rule information; and a policy effect evaluation module 110, arranged to evaluate an execution result of the policy rule information, and determine whether it is necessary to modify the policy rule information.

In the alternative embodiment, the policy effect evaluation module may regulate the policy rule and update the policy rule library according to a running state of each component instance and an overall running state of the user network. After the policy effect evaluation module updates the policy library, the user network service orchestration and management module is triggered to reconfigure and regulate a network of the execution layer.

Alternatively, as shown in FIG. 3, the management layer 10 may further include: a network component library 112, arranged to provide a network component to be generated, herein, information provided in the network component library includes at least one of the following: a function description about the network component, network component provider information, an available license quantity and a network component image; a business component library 114, arranged to provide a business component to be generated, herein, information provided in the business component library includes at least one of the following: a function description about the business component, business component provider information, an available license quantity and a business component image; and a user subscription library 116, arranged to manage user subscription information.

Alternatively, as shown in FIG. 3, the execution layer 20 may include: the network component 200, arranged to provide access service; and the business component 202, arranged to provide a value-added service for business data.

As an alternative embodiment of the present invention, the communication network architecture shown in FIG. 3 may be divided into the management layer and the execution layer. The management layer is mainly responsible for user service management and network operation and maintenance, while the execution layer is responsible for executing various functions related to network service. In the alternative embodiment, the execution layer is divided into a plurality of function components to realize different functions. According to different processed contents, the execution layer may be divided into a network component and a business component. The network component is mainly responsible for business signaling processing and business message processing for user network access, for example, user access management and mobility management. The business component is mainly responsible for value-added processing related to user businesses, for example, business security, encryption, Deep Packet Inspection (DPI), optimization and storage. These components may be divided as control-plane components and user-plane components according to whether a processing object mainly includes signaling or a data stream. These function components may be dynamically created by virtue of an NFV technology and dynamically form a network service system based on an SDN/Self-Organized Network (SON) technology.

End-to-end service may include: three parts, i.e. a terminal user, a network and a business. For implementing automatic scheduling of a dynamic network according to a requirement, a set of system architecture capable of organically implementing cooperation of the three is required to provide a support. A set of telecommunication network architecture for dynamic scheduling according to a requirement is described in the alternative embodiment.

The network architecture has characteristics as follows.

### (1) A management layer

Orchestration and scheduling of a network service resource and orchestration and scheduling of an open network capability are implemented through a user network service orchestration and management module. The user network service orchestration and management module externally acquires a network service requirement of a user, integrates factors of three aspects of network, business and user, and performs orchestration, scheduling and opening on the network service resource and the capability based on a related policy.

In order to achieve the abovementioned purpose, the management layer introduces the factors of the three aspects of network, business and user. The aspect of network may include a static network component library arranged to define and manage a set of network components which may be created and scheduled (including function descriptions about the components, provider information, available license quantity, component images and the like), and may also include a dynamic network component information management module, arranged to acquire, classify and analyze a real-time state and information of a network component which currently runs and form a corresponding information library; the aspect of business may include a static business component library arranged to define and manage a set of business components which may be created and scheduled (including function descriptions about the components, provider information, available license quantity, component images and the like), and it may also include a business component information management module, arranged to acquire, classify and analyze a real-time state and information of a business component which currently runs; and the aspect of user may also include a static user subscription library arranged to manage user subscription information and a dynamic user information management module, arranged to acquire and analyze information such as an attribute, state, position and behavior of the user and form a corresponding information library.

In addition, the management layer may further include a policy rule library, arranged to manage various policies in the network, and a policy effect evaluation function for comprehensively evaluating a policy execution effect to promote closed-loop optimization of the policies of the network.

### (2) An execution layer

Various components of the execution layer may be functions of conventional logical network elements in a telecommunication network, and may also be various components redefined according to a 5G requirement. A part of user-plane basic simple function components may be fused into SDN OF switch functions, and the other control-plane and user-plane components may be subjected to lifecycle management and scheduling in an NFV manner.

Deployment positions of the components may be scheduled according to different requirements, a part of the components may be deployed on a network side, a part of the components may be deployed on a terminal side, a distributed deployment proximal to the user may be used, and a centralized deployment may also be used.

Each component of the execution layer is dynamically created, orchestrated and managed to execute the related policies of the management layer through the management layer, may also report related information in the network to the management layer for network/business/user related analysis and organization according to a requirement of the management layer, configured for various network service orchestration and capability opening requirements.

The components of the execution layer may be functionally divided into:
1) a network component: providing a access service for the user, including: control-plane functions of access management, mobility management, IP address allocation, session establishment and the like and user-plane functions of user data message forwarding and the like; and
2) a business component: performing additional processing on business data of the user, for example, a value-added service such as transcoding, compression, security and storage.

The network components and the business components may further be divided into control-plane components and user-plane components during implementation. For example, access management and mobility management in the network components belong to a control-plane component, and user data message forwarding belongs to a user-plane component.

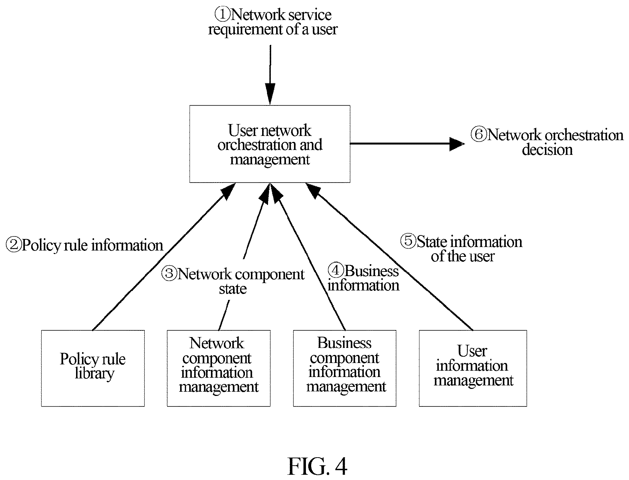

As another alternative embodiment of the present invention, FIG. 4 is a schematic diagram of a relationship between a user network orchestration and management module and another function module in a management layer according to an alternative embodiment of the present invention. As shown in FIG. 4, the policy rule library provides policy rule information for the user network orchestration and management module. A content of the policy rule information may include, but is not limited to: information such as creation of a new execution component (network component or business component) when a specific condition is met and how to configure a relationship between the execution components. Other contents of the policy rule information will not be listed one by one herein. The policy rule library is a set of policy rules generated according to a configuration of the operating company. The policy effect evaluation module regulates the policy rules and updates the policy rule library according to the running state of each component and the overall running state of the user network, and pushes updated policies to a user network management service module.

A network component state management module is responsible for collecting state information of a network component instance which currently runs in the network, and the state information of the network component instance may include: a position of the network component, load, capacity, reliability, network topology and the like. The network component state management module provides the collected state information of the network component to the user network orchestration and management module.

The business component information management module collects state information of a business component instance which currently runs in the network. The state information of the business component instance may include: load, capacity, capability, a network topology, a position of the business component and the like. The business component information management module provides the collected state information of the business component to the user network orchestration and management module.

The user information management module is responsible for collecting information of the user, for example, mobility, position, QoS, business preference and terminal capability of the user, and the user information management module sends the abovementioned user characteristics to the user network orchestration and management module.

The network service requirement of the user is a network service requirement from the operating company itself or a user of a virtual operating company, an enterprise, an organization and the like, for example, private network requirement of a virtual operation requirement, a network optimization requirement and the Internet of vehicles.

A typical network service requirement of the user will be described below with virtual operation as an example.

A virtual operating company A is intended to rent a network of a mobile network operating company B to provide a mobile network access service. The virtual operating company A expects the mobile network operating company B to provide a network service below for it: user capacity is 1 million, a required radio access bandwidth is 1Mbps per user, an output bandwidth of a core network is 1Tbps, a user range is limited in a preset area, user subscription and network management (for example, configuration of network components and service components) are implemented by the virtual operating company A, and the mobile network operating company B is only responsible for providing network infrastructures, for example, the network components and the service components, and ensuring reliable running of the network components and the service components. In the abovementioned example, the virtual operating company A is also required to specifically describe requirements on the network components and the service components, for example, the network components and service components which are required to be provided by the mobile network operating company B, for example, the following service components are required to be provided: transcoding and Network Address Translation (NAT) and the like, and the following network components are required to be provided: access control and mobility management and the like. For the network service requirement, the user is usually required to completely communicate and sign a corresponding protocol with the operating company, and a network service provider (for example, the abovementioned mobile network operating company B) may provide corresponding network service for the user according to the protocol.

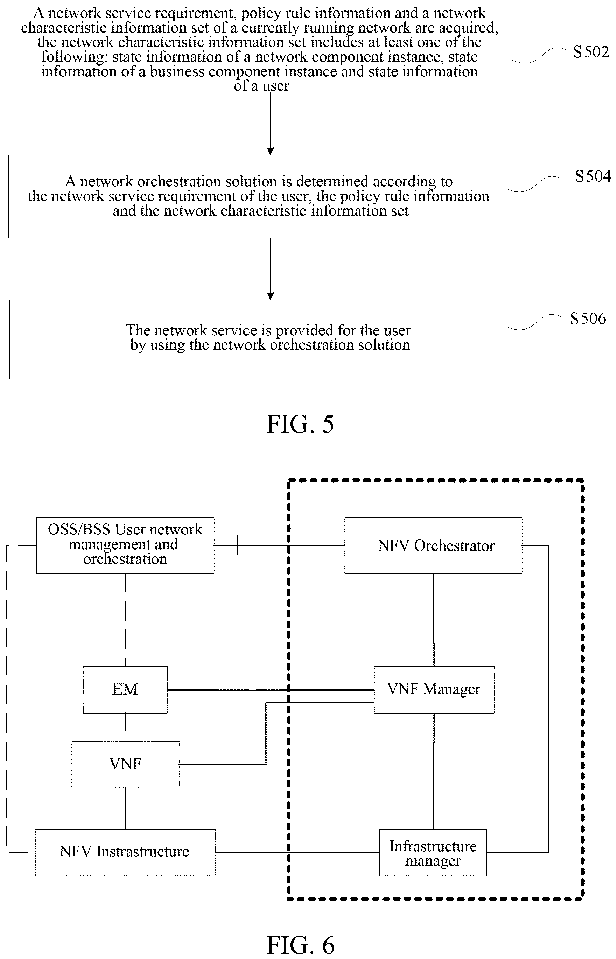

FIG. 5 is a flowchart of a method for providing a network service based on the abovementioned communication network architecture according to an embodiment of the present invention. As shown in FIG. 5, the method may include the following processing steps.

In Step S502, a network service requirement, policy rule information and a network characteristic information set of a currently running network are acquired, herein, the network characteristic information set includes at least one of the following: state information of a network component instance, state information of a business component instance and state information of a user.

In Step S504, a network orchestration solution is determined according to the network service requirement of the user, the policy rule information and the network characteristic information set.

In Step S506, the network service is provided for the user by using the network orchestration solution.

Alternatively, in Step S502, acquiring the network characteristic information set may include at least one of the following:
In Step S1, the state information of the network component instance is acquired from a network component information management module;
In Step S2, the state information of the business component instance is acquired from a business component information management module;
In Step S3, the state information of the user is acquired from a user information management module; and
In Step S4, the policy rule information is acquired from a policy rule library.

In an alternative implementation process, the above mentioned state information of the network component instance may include, but is not limited to, at least one of the following: a position of the network component instance, load, capacity, reliability and network topology; the above mentioned state information of the business component instance may include, but is not limited to, at least one of the following: load, capacity, capabilities, a network topology and a position of the business component instance; and the above mentioned state information of the user may include, but is not limited to, at least one of the following: mobility, a position, Quality of Service (QoS), a business preference, and a terminal capability.

Alternatively, in Step S506, the operation that the network service is provided for the user by using the network orchestration solution may include one of the following:
In Step S5, a new network component instance and/or business component instance is created according to the network orchestration solution;
In Step S6, an existing network component instance and/or business component instance is updated according to the network orchestration solution; and
In Step S7, current connecting relationships between network component instances, and/or between business component instances and/or between network component instances and business component instances are configured according to the network orchestration solution.

Alternatively, in Step S5, creating a new network component instance and/or business component instance according to the network orchestration solution may include operations below:
In Step S51, a network component to be generated is called from a network component library, and/or, a business component to be generated is called from a business component library; and
In Step S52, an NFV platform is requested to allocate a first virtual machine to the called network component to perform instantiation processing on the called network component; and/or, the NFV platform is requested to allocate a second virtual machine to the called business component to perform instantiation processing on the called business component.

In an alternative embodiment, when a user network orchestration and management module receives the network service requirement from the user, the user network orchestration and management module determines how to provide the requested network service for the user according to the policy rule information acquired from the policy rule library by combining the state information of the network component instance, the state information of the business component instance and user characteristics, which are acquired from the currently running network. For example, the user network orchestration and management module may make a decision of generating a new network component instance and/or service component instance. When the new network component instance and service component instance are required to be generated, the user network orchestration and management module will request an NFV platform interface to create a new virtual network element instance, load a version and configure the virtual network element instance to meet requirements of the network component instance and the business component instance.

Alternatively, in Step S6, an updating request may be sent to the NFV platform according to the network orchestration solution, herein, the updating request is used to request the NFV platform to perform updating processing on the existing network component instance and/or business component instance, and updating processing includes one of the following: capacity expansion performed on the existing network component instance and/or business component instance, version upgrading performed on the existing network component instance and/or business component instance, and virtual machine migration performed on the existing network component instance and/or business component instance.

In an alternative embodiment, if the user network orchestration and management module determines that it is unnecessary to create a new network component instance and service component instance and it is only necessary to perform capacity expansion, version upgrading or virtual machine migration on the existing network component instance and service component instance, the user network orchestration and management module also submits a corresponding requirement to the NFV platform for the NFV platform to meet the requirement of capacity expansion, version upgrading or virtual machine migration.

Alternatively, in Step S7, current communication paths between the network component instances and/or between the business component instances and/or between the network component instances and the business component instances may be configured according to the network orchestration solution, herein, a configured content includes at least one of the following: configuration of an IP route, configuration of a link security parameter and configuration of a QoS parameter of a communication link.

In an alternative embodiment, besides determining whether to generate a new network component instance and business component instance and whether to perform capacity expansion, upgrading and migration on the existing network component instance and business component instance, the user network orchestration and management module may further determine and configure the connecting relationships between the components, for example, that a network component instance 1 and a network component instance 2 need to be interconnected through IP, a bandwidth required to be configured, QoS required to be guaranteed and security level required to be guaranteed for a link between the network component instance 1 and the network component instance 2, and an interface type between the network component instance 1 and the network component instance 2 (for example, Transmission Control Protocol (TCP)). When there exists a business link requirement, the user network orchestration and management module is further required to configure a business link path, for example, a path of a business link 1 passes through a business component instance 1, a business component instance 3 and a business component instance 4.

As yet another alternative embodiment of the present invention, FIG. 6 is a schematic diagram of a relationship between a user network orchestration and management module and an NFV platform according to an alternative embodiment of the present invention. As shown in FIG. 6, the user network orchestration and management module is located in an OSS/BSS in an architecture defined by NFV, and it may be connected with an NFV Orchestrator (NFVO) through an Os-Nfvo interface. The NFV platform may include: the NFVO, a Virtual Network Function Manager (VNFM), a Virtual Infrastructure Manager (VIM), a Network Function Virtualization Infrastructure (NFVI) and the like. During NFV, the NFVO of the NFV platform may dynamically scale capacity of a virtual network element according to a network load. Herein, it is important to note that such dynamic scaling of the NFV platform is dynamic scaling within a required range of the user network orchestration and management module, and may not regulate the capacity of the network element to exceed a maximum range set by the user network orchestration and management module.

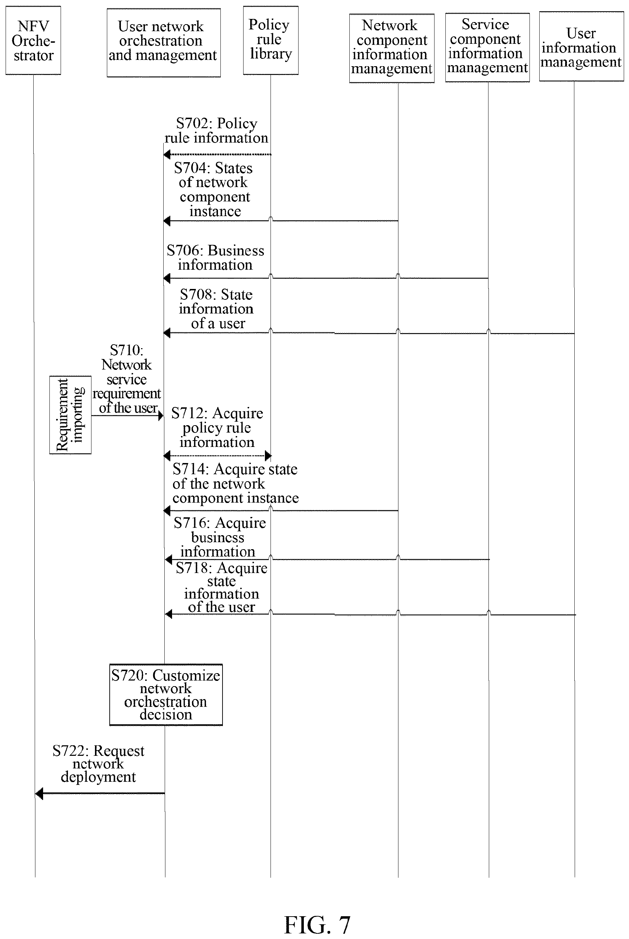

The abovementioned alternative implementation process will be further described below with reference to an alternative implementation mode shown in FIG. 7.

FIG. 7 is a flowchart of execution of policy decision of a user network service orchestration and management module according to an alternative embodiment of the present invention. As shown in FIG. 7, the flow may include the following processing steps.

In Step S702, a policy rule library pushes a policy rule configured by an operating company to a user network service orchestration and management module.

In Step S704, a network component information management module sends collected state information of each network component instance which currently runs to the user network service orchestration and management module. The network component information management module may send the state information of the network component instance to the user network service orchestration and management module according to pre-configured timing.

In Step S706, a business component information management module sends collected business information of each business component instance which currently runs to the user network service orchestration and management module. The business component information management module may send the business information of the business component instance to the user network service orchestration and management module according to pre-configured timing.

In Step S708, a user information management module sends collected state information of a user to the user network service orchestration and management module. The user information management module may send the state information of the user to the user network service orchestration and management module according to pre-configured timing.

In Step S710, the user network service orchestration and management module receives a new network service requirement from the user.

In Step S712, if the user network service orchestration and management module does not have related policy rule information, the user network service orchestration and management module acquires the policy rule information from the policy rule library.

In Step S714, if the user network service orchestration and management module does not have the latest state information of the network component instance, the user network service orchestration and management module acquires the state information of the network component instance from the network component information management module.

In Step S716, if the user network service orchestration and management module does not have the latest state information of the business component instance, the user network service orchestration and management module acquires the state information of the business component instance from the business component information management module.

In Step S718, if the user network service orchestration and management module does not have the latest state information of the user, the user network service orchestration and management module acquires the state information of the user from the user information management module.

In Step S720, the user network service orchestration and management module customizes a network orchestration policy according to the policy rule, the state information of the network component instance, the state information of the business component instance and the state information of the user, including creation or modification of network components and service components, establishment or modification of connections between the components, and the like.

In Step S722, the user network service orchestration and management module sends the network orchestration policy to an NFV Orchestrator, and the NFV Orchestrator helps the user network service orchestration and management module to instantiate a new network component and business component, or modifies an existing network component instance and business component instance, and configures connecting relationships between the components.

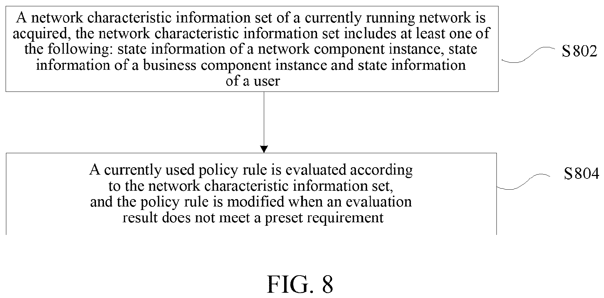

FIG. 8 is a flowchart of a method for evaluating a policy rule based on the abovementioned communication network architecture according to an embodiment of the present invention. As shown in FIG. 8, the method may include the following processing steps.

In Step S802, a network characteristic information set of a currently running network is acquired, herein, the network characteristic information set includes at least one of the following: state information of a network component instance, state information of a business component instance and state information of a user.

In Step S804, a currently used policy rule is evaluated according to the network characteristic information set, and the policy rule is modified when an evaluation result does not meet a preset requirement.

Alternatively, after the policy rule is modified in Step S804, the method may further include the following operation:
In Step S8, the modified policy rule is pushed to a user network service orchestration and management module to trigger the user network service orchestration and management module to regulate a network deployment of an execution layer.

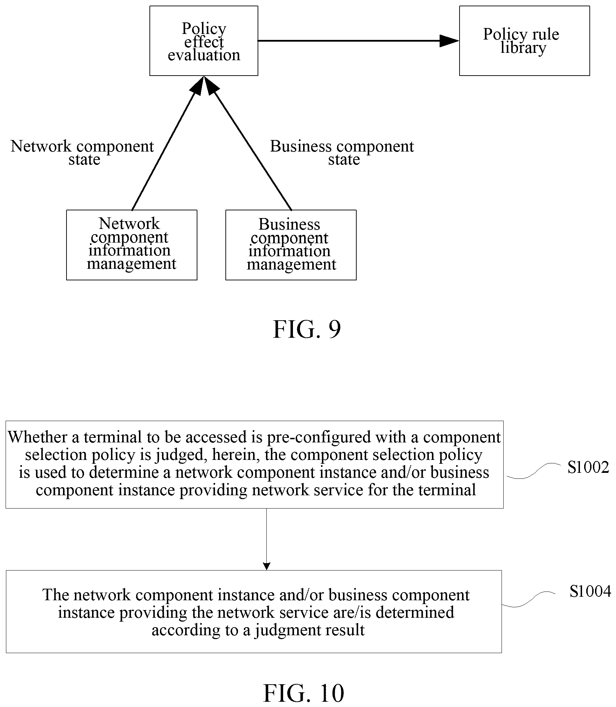

FIG. 9 is a schematic diagram of a policy effect evaluation process according to an alternative embodiment of the present invention. As shown in FIG. 9, a policy effect evaluation module may collect running state information of the network, for example, component load, throughput and business information, and regulates a network service orchestration and management policy. A policy regulation process will be described below with an example. It is supposed that a mobile operating company has a mobile network which simultaneously provides services for a human-to-human communication network and the Internet of things. Along with addition of an Internet of things terminal, a mobile network gradually gets unlikely to be adapted to simultaneous provision of service for the abovementioned two types of businesses. The policy effect evaluation module determines to change the one-network policy set before according to the collected network information, which may include: the state information of the network component instance and the state information of the business component instance, and then the policy effect evaluation module modifies a policy library, and serves a service requirement of the Internet of things by virtue of a private mobile network. The policy effect evaluation module may further specify that: a specific mobile network is required to serve a specific type of Internet of things, for example, a proprietary mobile network is required to be used for serving the Internet of vehicles due to its special requirement on real-time performance. The policy effect evaluation module may trigger a user network service orchestration and management module to perform network reconfiguration and regulation after updating the policy library.

FIG. 10 is a flowchart of a method for selecting a service component based on the abovementioned communication network architecture according to an embodiment of the present invention. As shown in FIG. 10, the method may include the following processing steps.

In Step S1002, whether a terminal to be accessed is pre-configured with a component selection policy is judged, herein, the component selection policy is used to determine a network component instance and/or business component instance providing network service for the terminal.

In Step S1004, the network component instance and/or business component instance providing the network service are/is determined according to a judgment result.

In an alternative implementation process, a network component is responsible for providing access service for a user, which may include: control-plane functions of access management, mobility management, IP address allocation, session establishment and the like and user-plane functions of user data message forwarding and the like. A business component is responsible for additional processing of business data of the user, for example, value-added service such as transcoding, compression, security and storage.

Alternatively, in Step S1004, the network component instance and/or business component instance providing the network service are/is determined according to the judgment result may include steps below.

In Step S9, it is determined that the terminal is pre-configured with the component selection policy according to the judgment result.

In Step S10, the network component instance and/or business component instance providing the network service are/is selected for the terminal according to the component selection policy.

Alternatively, in Step S1004, determining the network component instance and/or business component instance providing the network service according to the judgment result may include operations below.

In Step S 11, it is determined that the terminal is not pre-configured with the component selection policy according to the judgment result.

In Step S12, a network characteristic information set of a currently running network is acquired, herein, the network characteristic information set includes at least one of the following: state information of the network component instance, state information of the business component instance, and state information of a user; and the network component instance and/or business component instance providing the network service are/is selected for the terminal according to the network characteristic information set.

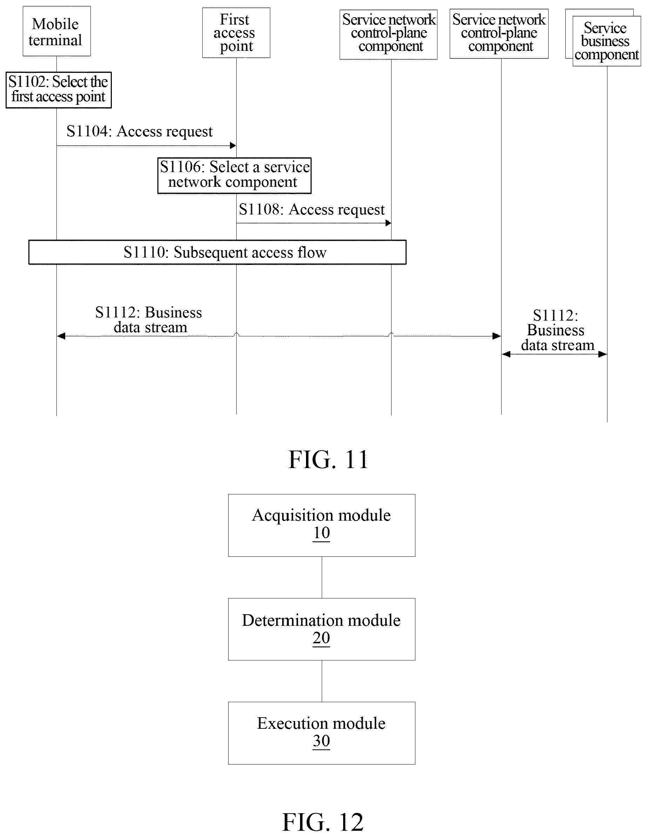

As yet another alternative embodiment of the present invention, FIG. 11 is a flowchart of a service path selection process during access of a mobile terminal according to an alternative embodiment of the present invention. As shown in FIG. 11, during access of the mobile terminal, the mobile terminal may have been pre-configured with the component selection policy, for example, a mobile terminal of the Internet of things is configured with an identifier of a private network accessed by it. At this moment, the mobile terminal sends a network identifier of a network to be accessed to a first access point during access, and the first access point selects a subsequent network component instance and business component instance according to the network identifier specified by the mobile terminal. The mobile terminal may also a select the first access point according to a pre-configuration. For example, a certain special Internet of things terminal may be arranged to access only by selecting a specific Radio Access Technology (RAT), and at this moment, the mobile terminal may select the first access point according to a configured RAT type.

When the mobile terminal does not specify the network to be accessed by it, the network may determine the network component instance and business component instance serving the user during access according to a user characteristic (for example, information of a terminal type, a position and a business preference), a network state, business information and a business characteristic (for example, a throughput requirement, a mobility requirement, a security requirement and a delay requirement) requested by the user. At this moment, the mobile terminal accesses the first access point at first, and the first access point selects the network component instance and service component instance serving it according to the abovementioned information.

How to select the serving network component instance and business component instance for the mobile terminal will be described below with an example. It is supposed that a user watching a ball game in a gymnasium expects to replay wonderful goals through a mobile phone, the mobile terminal of the user initiates a network connection request, and the network connection request carries the abovementioned "replay" request. After receiving the abovementioned request, a network finds that a network component instance located in the gymnasium may provide better service because a video to be replayed is stored in a local server. The network selects the local network component instance in the gymnasium for serving the mobile terminal. Moreover, because many people view the wonderful goals by virtue of a replay function, the network determines that it is necessary to compress and transcode video data to reduce an air interface load, and thus the network selects a corresponding compression and transcoding service component instance for serving the mobile terminal.

The flow may include the following processing steps.

In Step S1102, the mobile terminal selects the first access point according to a configuration and information broadcast by the network.

In Step S1104, the mobile terminal sends an access request to the first access point.

In Step S1106, the first access point selects a control-plane network component instance for serving the mobile terminal according to the network information specified by the mobile terminal. If the mobile terminal does not specify the network to be accessed by it, the first access point may determine the control-plane network component instance for serving the user during access according to the user characteristic (for example, the information of the terminal type, the position and the business preference), the network state, the business information and the business characteristic (for example, the throughput requirement, the mobility requirement, the security requirement and the delay requirement) requested by the user.

In Step S1108, the first access point sends the access request to the serving control-plane network component instance selected by it.

In Step S1110, the mobile terminal performs subsequent negotiation with the serving control-plane network component instance, and the serving control-plane network component instance selects a serving user-plane component instance and business component instance for the mobile terminal, and establishes a user-plane channel. After negotiation, the mobile terminal may send business data through the user-plane channel.

In Step S1112, the mobile terminal sends the business data to the user-plane network component instance through the user-plane channel. The user-plane network component instance sends the business data of the user to the control-plane network component instance, and performs business data processing for the business component instance specified by the user.

An implementation process of the abovementioned whole technical solution will be further described below with an example when a new user requirement is made.

In the example, it is supposed that an operating company O has a human-to-human communication network operated by itself in currently running. A policy set by the operating company O is that a private network will be organized to provide service for it if an Internet of things requirement is received. Moreover, different private networks are used for different Internet of things requirements, for example, different mobile networks will be used for an Internet of things requirement from an organization A and an Internet of things requirement from an organization B for providing service. Different private networks are also used for providing service for different Internet of things requirements from the same organization, for example, the organization A expects the operating company O to simultaneously provide Internet of vehicles service and remote medical Internet of things service, and because the two Internets of things have different network requirements, the operating company O provides service for the organization A through two different private networks respectively. Besides the abovementioned policy, the operating company O may also specify a more detailed network deployment policy. For example, for a network with a low mobility requirement, a mobility management component may be eliminated because a position of a terminal is kept unchanged; if a user in a network requires a large number of Internet access businesses and a throughput is relatively higher, the network sets a business component instance such as a Content Distribution Network (CDN) for the user at a position of an access point; and if the user requires a large number of local businesses, the network may proximally select a network component instance and a business component instance for the user. The operating company O has been configured with corresponding rules in a policy rule library, waiting for a new network requirement of the user.

The operating company O receives a network service requirement from S. S is an organizer of a football match, and S expects that the operating company O may provide a coverage enhancement business for a gymnasium during the football match. The gymnasium has had wireless coverage, but such wireless coverage may not meet network access requirements of a large number of users during the football match. Therefore, S expects that the operating company O may provide an enhanced network, in which basic communication requirements of audience, provision of wonderful replay for the live audience during the football match, short-distance communication between the audience, live broadcasting and comment interaction of a social network, and the like may be included. The number of the audience in the gymnasium during the football game is predicted to reach about 3,000, and predicted average bandwidth consumption for the audience is 1Mbps.

The operating company O decides to provide the abovementioned temporary service for S. The operating company O submits the received network service requirement to a network management layer, and a user network service orchestration and management module is finally triggered to orchestrate the network to meet the network service requirement of S.

The user network service orchestration and management module checks the policy received from the policy rule library after receiving the abovementioned requirement. The user network service orchestration and management module finds that it is necessary to re-establish new network component instance and business component instance for the new network service request according to the policy rule configured by the operating company O. According to the requirement of S, the user network service orchestration and management module determines that it is necessary to arrange the following network component instances and business component instances: network control-plane and user-plane component instances such as deploying user access management, low-mobility management, IP address management, user-plane message forwarding and the like nearby in the gymnasium; and business component instances such as deploying compression, transcoding and the like nearby in the gymnasium to reduce impact of high traffic on an air interface. In addition, the user network service orchestration and management module further determines scales of the network component instances and the business component instances and bandwidth requirements between the component instances according to the number of the audience and traffic requirements, which are provided by S.

After making the abovementioned network orchestration decision, the user network service orchestration and management module submits the abovementioned requirement to an NFV Orchestrator. The NFV Orchestrator applies for physical resources for the network component instances and the business component instances, including a Central Processing Unit (CPU), a memory and a storage device, and the network component instances, the business component instances and the like are loaded, and meanwhile, the NFV Orchestrator applies for corresponding bandwidths for communication links between the component instances. After the network is created, other function entities of the management layer are responsible for configuring the network component instances and the business component instances, thereby delivering the network to S for use.

FIG. 12 is a structure block diagram of a device for providing a network service based on the abovementioned communication network architecture according to an embodiment of the present invention. As shown in FIG. 12, the device for providing the network service may include: an acquisition module 10, arranged to acquire a network service requirement, policy rule information and a network characteristic information set of a currently running network, herein, the network characteristic information set includes at least one of the following: state information of a network component, state information of a business component and state information of a user; a determination module 20, arranged to determine a network orchestration solution according to the network service requirement, the policy rule information and the network characteristic information set of the currently running network; and an execution module 30, arranged to provide the network service for the user by using the network orchestration solution.

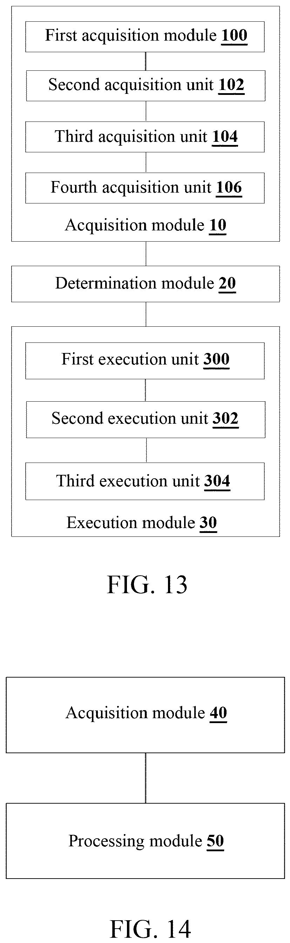

Alternatively, as shown in FIG. 13, the acquisition module 10 may include: a first acquisition unit 100, arranged to acquire the state information of the network component instance from a network component information management module; a second acquisition unit 102, arranged to acquire the state information of the business component instance from a business component information management module; a third acquisition unit 104, arranged to acquire the state information of the user from a user information management module; and a fourth acquisition unit 106, arranged to acquire the policy rule information from a policy rule library.

Alternatively, as shown in FIG. 13, the execution module 30 may include: a first execution unit 300, arranged to create a new network component instance and/or business component instance according to the network orchestration solution; a second execution unit 302, arranged to update an existing network component instance and/or business component instance according to the network orchestration solution; and a third execution unit 304, arranged to configure current connecting relationships between network component instances, and/or between business component instances and/or between network component instances and business component instances according to the network orchestration solution.

Alternatively, the first execution unit 300 may include: a calling subunit (not shown in the figure), arranged to call a network component to be generated from a network component library, and/or, call a business component to be generated from a business component library; and a request subunit (not shown in the figure), arranged to request an NFV platform to allocate a first virtual machine to the called network component to perform instantiation processing on the called network component, and/or, request the NFV platform to allocate a second virtual machine to the called business component to perform instantiation processing on the called business component.

Alternatively, the second execution unit 302 is arranged to send an updating request to the NFV platform according to the network orchestration solution, herein, the updating request is used to request the NFV platform to perform updating processing on the existing network component instance and/or business component instance, and updating processing includes at least one of the following: capacity expansion performed on the existing network component instance and/or business component instance, version upgrading performed on the existing network component instance and/or business component instance, and virtual machine migration performed on the existing network component instance and/or business component instance.

Alternatively, the third execution unit 304 is arranged to configure current communication paths between the network component instances and/or between the business component instances and/or between the network component instances and the business component instances according to the network orchestration solution, herein, a configured content includes at least one of the following: configuration of an IP route, configuration of a link security parameter and configuration of a QoS parameter of a communication link.

FIG. 14 is a structure block diagram of a device for evaluating a policy rule based on the abovementioned communication network architecture according to an embodiment of the present invention. As shown in FIG. 14, the device for evaluating the policy rule may include: an acquisition module 40, arranged to acquire a network characteristic information set of a currently running network, herein, the network characteristic information set includes at least one of the following: state information of a network component instance, state information of a business component instance and state information of a user; and a processing module 50, arranged to evaluate a currently used policy rule according to the network characteristic information set, and modify the policy rule when an evaluation result does not meet a preset requirement.

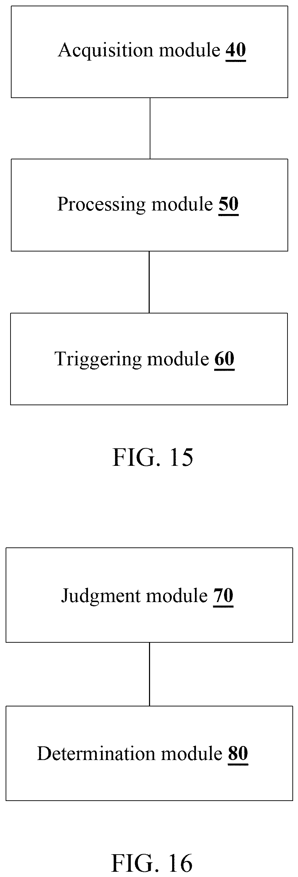

Alternatively, as shown in FIG. 15, the abovementioned device may further include: a triggering module 60, arranged to push the modified policy rule to a user network service orchestration and management module to trigger the user network service orchestration and management module to regulate a network deployment of an execution layer.

FIG. 16 is a structure block diagram of a device for selecting a service component based on the abovementioned communication network architecture according to an embodiment of the present invention. As shown in FIG. 16, the device for selecting the service component may include: a judgment module 70, arranged to judge whether a terminal to be accessed is pre-configured with a component selection policy, herein, the component selection policy is used to determine a network component instance and/or business component instance providing network service for the terminal; and a determination module 80, arranged to determine the network component instance and/or business component instance providing the network service according to a judgment result.

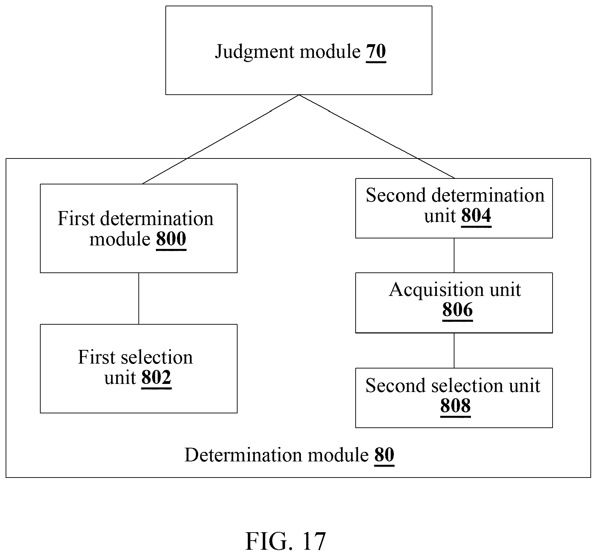

Alternatively, as shown in FIG. 17, the determination module 80 may include: a first determination unit 800, arranged to determine that the terminal is pre-configured with the component selection policy according to the judgment result; and a first selection unit 802, arranged to select the network component instance and/or business component instance providing the network service for the terminal according to the component selection policy.

Alternatively, as shown in FIG. 17, the determination module 80 may include: a second determination unit 804, arranged to determine that the terminal is not pre-configured with the component selection policy according to the judgment result; an acquisition unit 806, arranged to acquire a network characteristic information set of a currently running network, herein, the network characteristic information set includes at least one of the following: state information of the network component instance, state information of the business component instance, and state information of a user; and a second selection unit 808, arranged to select the network component instance and/or business component instance providing the network service for the terminal according to the network characteristic information set.

From the above descriptions, it can be seen that the abovementioned embodiments achieve the following technical effects (it is important to note that these effects are effects which may be achieved by some alternative embodiments): by using the technical solutions provided by the embodiments of the present invention, the operating company may customize and automatically schedule the network according to the requirement of the user, thereby providing service for the user more conveniently.

Obviously, those skilled in the art should know that each module or each step in the abovementioned present invention may be implemented by a universal computing device, they may be concentrated on a single computing device or distributed on a network formed by a plurality of computing devices, and alternatively, they may be implemented by program codes executable by the computing devices, so that they may be stored in a storage device for execution with the computing devices, and in some circumstances, the shown or described steps may be executed in sequences different from those described here, or they may be made into various integrated circuit modules respectively, or multiple modules or steps therein may be made into a single integrated circuit module for implementation. As a consequence, the present invention is not limited to any specific hardware and software combination.

The above is only the alternative embodiments of the present invention and not intended to limit the present invention, and for those skilled in the art, the present invention may have various modifications and variations. Any modifications, equivalent replacements, improvements and the like within the spirit and principle of the present invention shall fall within the scope of protection of the present invention.

### Industrial Applicability

As mentioned above, the methods and devices for providing the network service, evaluating the policy rule and selecting the service component provided by the embodiments of the present invention have the following beneficial effects that, an operating company may customize and automatically schedule a network according to the requirement of the user, so that the operating company may customize and automatically schedule the network according to the requirement of the user to further provide service for the user more conveniently.

## Claims

1. A communication network architecture, comprising:
a management layer, arranged to acquire a network service requirement of a user, and perform creation, orchestration and scheduling on function components on an execution layer based on the network service requirement of the user; and
the execution layer, arranged to provide a network service for the user, and/or, report information to be used by the management layer in a process of performing creation, orchestration and scheduling on the function components to the management layer, wherein the execution layer is formed by networking a plurality of function components, and the function components comprise at least one of the following: a network component and a business component.

2. The architecture according to claim 1, wherein the management layer comprises:
a network component information management module, arranged to provide state information of a network component instance which currently runs;
a business component information management module, arranged to provide state information of a business component instance which currently runs;
a user information management module, arranged to provide state information of the user; and
a user network service orchestration and management module, arranged to acquire policy rule information, and perform creation, orchestration and scheduling on the function components according to the policy rule information, the network service requirement of the user and a network characteristic information set, wherein the network characteristic information set comprises at least one of the following: the state information of the network component instance, the state information of the business component instance and the state information of the user.

3. The architecture according to claim 2, wherein the management layer further comprises:
a policy rule library, arranged to provide the policy rule information; and
a policy effect evaluation module, arranged to evaluate an execution result of the policy rule information, and determine whether it is necessary to modify the policy rule information.

4. The architecture according to claim 3, wherein the management layer further comprises:
a network component library, arranged to provide a network component to be generated, wherein information provided in the network component library comprises at least one of the following: a function description about the network component, network component provider information, an available license quantity and a network component image;
a business component library, arranged to provide a business component to be generated, wherein information provided in the business component library comprises at least one of the following: a function description about the business component, business component provider information, an available license quantity and a business component image; and
a user subscription library, arranged to manage user subscription information.

5. The architecture according to claim 1, wherein the execution layer comprises:
the network component, arranged to provide an access service; and
the business component, arranged to provide a value-added service for business data.

6. A method for providing a network service based on the communication network architecture according to any one of claims 1-5, comprising:
acquiring a network service requirement of a user, policy rule information and a network characteristic information set of a currently running network, wherein the network characteristic information set comprises at least one of the following: state information of a network component instance, state information of a business component instance and state information of the user;
determining a network orchestration solution according to the network service requirement of the user, the policy rule information and the network characteristic information set; and
providing the network service for the user by using the network orchestration solution.

7. The method according to claim 6, wherein acquiring the network characteristic information set comprises at least one of the following:
acquiring the state information of the network component instance from a network component information management module;
acquiring the state information of the business component instance from a business component information management module;
acquiring the state information of the user from a user information management module; and
acquiring the policy rule information from a policy rule library.

8. The method according to claim 7, wherein
the state information of the network component instance comprises at least one of the following: a position of the network component instance, load, capacity, reliability and network topology;
the state information of the business component instance comprises at least one of the following: load, capacity, capability, a network topology and a position of the business component instance; and
the state information of the user comprises at least one of the following: mobility, a position, Quality of Service QoS, a business preference, and a terminal capability.

9. The method according to claim 6, wherein providing the network service for the user by using the network orchestration solution comprises one of the following:
creating a new network component instance and/or business component instance according to the network orchestration solution;
updating an existing network component instance and/or business component instance according to the network orchestration solution; and
configuring current connecting relationships between network component instances, and/or between business component instances and/or between network component instances and business component instances according to the network orchestration solution.

10. The method according to claim 9, wherein creating the new network component instance and/or business component instance according to the network orchestration solution comprises:
calling a network component to be generated from a network component library, and/or, calling a business component to be generated from a business component library;
requesting a Network Function Virtualization NFV platform to allocate a first virtual machine to the called network component to perform instantiation processing on the called network component; and/or, requesting the NFV platform to allocate a second virtual machine to the called business component to perform instantiation processing on the called business component.

11. The method according to claim 9, wherein an updating request is sent to the NFV platform according to the network orchestration solution, wherein the updating request is used to request the NFV platform to perform updating processing on the existing network component instance and/or business component instance, and updating processing comprises at least one of the following: capacity expansion performed on the existing network component instance and/or business component instance, version upgrading performed on the existing network component instance and/or business component instance, and virtual machine migration performed on the existing network component instance and/or business component instance.

12. The method according to claim 9, wherein current communication paths between the network component instances and/or between the business component instances and/or between the network component instances and the business component instances are configured according to the network orchestration solution, wherein a configured content comprises at least one of the following: configuration of an Internet Protocol IP route, configuration of a link security parameter and configuration of a QoS parameter of a communication link.

13. A method for evaluating a policy rule based on the communication network architecture according to any one of claims 1-5, comprising:
acquiring a network characteristic information set of a currently running network, wherein the network characteristic information set comprises at least one of the following: state information of a network component instance, state information of a business component instance and state information of a user; and
evaluating a currently used policy rule according to the network characteristic information set, and modifying the policy rule when an evaluation result does not meet a preset requirement.

14. The method according to claim 13, wherein after modifying the policy rule, the method further comprises:
pushing the modified policy rule to a user network service orchestration and management module to trigger the user network service orchestration and management module to regulate a network deployment of an execution layer.

15. A method for selecting a service component based on the communication network architecture according to any one of claims 1-5, comprising:
judging whether a terminal to be accessed is pre-configured with a component selection policy, wherein the component selection policy is used to determine a network component instance and/or business component instance providing network service for the terminal; and
determining the network component instance and/or business component instance providing the network service according to a judgment result.

16. The method according to claim 15, wherein determining the network component instance and/or business component instance providing the network service according to the judgment result comprises:
determining that the terminal is pre-configured with the component selection policy according to the judgment result; and
selecting the network component instance and/or business component instance providing the network service for the terminal according to the component selection policy.

17. The method according to claim 15, wherein determining the network component instance and/or business component instance providing the network service according to the judgment result comprises:
determining that the terminal is not pre-configured with the component selection policy according to the judgment result;
acquiring a network characteristic information set of a currently running network, wherein the network characteristic information set comprises at least one of the following: state information of the network component instance, state information of the business component instance, and state information of a user; and
selecting the network component instance and/or business component instance providing the network service for a mobile terminal according to the network characteristic information set.

18. A device for providing a network service based on the communication network architecture according to any one of claims 1-5, comprising:
an acquisition module, arranged to acquire a network service requirement, policy rule information and a network characteristic information set of a currently running network, wherein the network characteristic information set comprises at least one of the following: state information of a network component instance, state information of a business component instance and state information of a user;
a determination module, arranged to determine a network orchestration solution according to the network service requirement, the policy rule information and the network characteristic information; and
an execution module, arranged to provide the network service for the user by using the network orchestration solution.

19. The device according to claim 18, wherein the acquisition module comprises:
a first acquisition unit, arranged to acquire the state information of the network component instance from a network component information management module;
a second acquisition unit, arranged to acquire the state information of the business component instance from a business component information management module;
a third acquisition unit, arranged to acquire the state information of the user from a user information management module; and
a fourth acquisition unit, arranged to acquire the policy rule information from a policy rule library.

20. The device according to claim 18, wherein the execution module comprises:
a first execution unit, arranged to create a new network component instance and/or business component instance according to the network orchestration solution;
a second execution unit, arranged to update an existing network component instance and/or business component instance according to the network orchestration solution; and
a third execution unit, arranged to configure current connecting relationships between network component instances, and/or between business component instances and/or between network component instances and business component instances according to the network orchestration solution.

21. The device according to claim 20, wherein the first execution unit comprises:
a calling subunit, arranged to call a network component to be generated from a network component library, and/or, call a business component to be generated from a business component library; and
a request subunit, arranged to request a Network Function Virtualization NFV platform to allocate a first virtual machine to the called network component to perform instantiation processing on the called network component, and/or, request the NFV platform to allocate a second virtual machine to the called business component to perform instantiation processing on the called business component.

22. The device according to claim 20, wherein the second execution unit is arranged to send an updating request to the NFV platform according to the network orchestration solution, wherein the updating request is used to request the NFV platform to perform updating processing on the existing network component instance and/or business component instance, and updating processing comprises at least one of the following: capacity expansion performed on the existing network component instance and/or business component instance, version upgrading performed on the existing network component instance and/or business component instance, and virtual machine migration performed on the existing network component instance and/or business component instance.

23. The device according to claim 20, wherein the third execution unit is arranged to configure current communication paths between the network component instances and/or between the business component instances and/or between the network component instances and the business component instances according to the network orchestration solution, wherein a configured content comprises at least one of the following: configuration of an Internet Protocol IP route, configuration of a link security parameter and configuration of a Quality of Service QoS parameter of a communication link.

24. A device for evaluating a policy rule based on the communication network architecture according to any one of claims 1-5, comprising:
an acquisition module, arranged to acquire a network characteristic information set of a currently running network, wherein the network characteristic information set comprises at least one of the following: state information of a network component instance, state information of a business component instance and state information of a user; and
a processing module, arranged to evaluate a currently used policy rule according to the network characteristic information set, and modify the policy rule when an evaluation result does not meet a preset requirement.

25. The device according to claim 24, wherein the device further comprises:
a triggering module, arranged to push the modified policy rule to a user network service orchestration and management module to trigger the user network service orchestration and management module to regulate a network deployment of an execution layer.

26. A device for selecting a service component based on the communication network architecture according to any one of claims 1-5, comprising:
a judgment module, arranged to judge whether a terminal to be accessed is pre-configured with a component selection policy, wherein the component selection policy is used to determine a network component instance and/or business component instance providing network service for the terminal; and
a determination module, arranged to determine the network component instance and/or business component instance providing the network service according to a judgment result.

27. The device according to claim 26, wherein the determination module comprises:
a first determination unit, arranged to determine that the terminal is pre-configured with the component selection policy according to the judgment result; and
a first selection unit, arranged to select the network component instance and/or business component instance providing the network service for the terminal according to the component selection policy.

28. The device according to claim 26, wherein the determination module comprises:
a second determination unit, arranged to determine that the terminal is not pre-configured with the component selection policy according to the judgment result;
an acquisition unit, arranged to acquire a network characteristic information set of a currently running network, wherein, the network characteristic information set comprises at least one of the following: state information of the network component instance, state information of the business component instance, and state information of a user; and
a second selection unit, arranged to select the network component instance and/or business component instance providing the network service for the terminal according to the network characteristic information set.
